# EUROPEAN PATENT APPLICATION

(11) **EP 4 296 405 A1**
(43) Date of publication of application: **27.12.2023**
(21) Application number: 22755835.0
(22) Date of filing: 24.01.2022
(51) Int. Cl.: C25B 3/25, C01B 3/02, C25B 9/00, C25B 15/08

(54) **APPARATUS FOR PRODUCING ORGANIC HYDRIDE AND METHOD FOR PRODUCING ORGANIC HYDRIDE**

(30) Priority: 19.02.2021 JP 2021025666
(71) Applicant: ENEOS Corporation, Chiyoda-ku Tokyo 100-8162 (JP)
(72) Inventor: TAKAMURA Toru, Tokyo 100-8162 (JP); IDE Kohei, Tokyo 100-8162 (JP); KIDOGUCHI Satoshi, Tokyo 100-8162 (JP); MATSUOKA Koji, Tokyo 100-8162 (JP)
(74) Representative: Algemeen Octrooi- en Merkenbureau B.V.
(86) International application number: PCT/JP2022/002360
(87) International publication number: WO 2022/176511

(57) **Abstract**

This apparatus 2 for producing an organic hydride is provided with: a cathode chamber 18 which contains a cathode electrode 14 for generating an organic hydride by hydrogenating an object to be hydrogenated in a cathode solution by means of protons; a cathode inlet 30 which is connected to the cathode chamber 18 in order to supply the cathode solution into the cathode chamber 18 from the outside; an upper cathode outlet 32 which is connected to the cathode chamber 18 in order to discharge the cathode solution and a hydrogen gas to the outside from the cathode chamber 18; and a lower cathode outlet 34 which is connected to the cathode chamber 18 at a lower position than the upper cathode outlet 32 in order to discharge the cathode solution and water to the outside from the cathode chamber 18.

## Description

### [TECHNICAL FIELD]

The present invention relates to an organic hydride production device and an organic hydride production method.

### [BACKGROUND ART]

In recent years, in order to suppress the carbon dioxide emission amount in the energy generation process, renewable energy is expected to be used, which is obtained by solar light, wind power, hydraulic power, geothermal power generation, and the like. As an example, a system for generating hydrogen by performing water electrolysis using power derived from renewable energy has been devised. In addition, an organic hydride system has attracted attention as an energy carrier for large-scale transportation and storage of hydrogen derived from renewable energy.

Regarding a technique for producing an organic hydride, a conventional organic hydride production device including an electrolyzer having an oxidation electrode for generating protons from water and a reduction electrode for hydrogenating an organic compound (substance to be hydrogenated) having an unsaturated bond is known (see, for example, Patent Literature 1). In this organic hydride production device, a current flows between the oxidation electrode and the reduction electrode while water is supplied to the oxidation electrode, and a substance to be hydrogenated is supplied to the reduction electrode, so that hydrogen is added to the substance to be hydrogenated to obtain an organic hydride.

### [PRIOR ART DOCUMENTS]

### [Patent Literature]

[Patent Literature 1] WO2012/091128A

### [SUMMARY OF INVENTION]

### [TECHNICAL PROBLEM]

As a result of intensive studies on the above-described technique for producing an organic hydride, the present inventors have recognized that there is room for improvement in the Faraday efficiency (current efficiency) at the time of producing the organic hydride in the conventional technique.

The present invention has been made in view of such a situation, and an object thereof is to provide a technique for improving the Faraday efficiency at the time of producing an organic hydride.

### [SOLUTION TO PROBLEM]

One aspect of the present invention is an organic hydride production device. The organic hydride production device includes: a cathode chamber that equips a cathode electrode for hydrogenating a substance to be hydrogenated in a catholyte with a proton to produce an organic hydride; a cathode inlet that is connected to the cathode chamber and supplies an external catholyte into the cathode chamber; an upper cathode outlet that is connected to the cathode chamber and discharges the catholyte and hydrogen gas in the cathode chamber to the outside; and a lower cathode outlet that is connected to the cathode chamber below the upper cathode outlet and discharges the catholyte and water in the cathode chamber to the outside.

Another aspect of the present invention is an organic hydride production method. The organic hydride production method includes: supplying a catholyte to a cathode chamber equipping a cathode electrode for hydrogenating a substance to be hydrogenated in the catholyte with a proton to produce an organic hydride; and discharging the catholyte and hydrogen gas in the cathode chamber to the outside from the cathode chamber, and discharging the catholyte and water in the cathode chamber to the outside below a discharge position of the catholyte and the hydrogen gas.

Any combinations of the above components and conversion of the expressions in the present disclosure between methods, devices, systems, and the like are also effective as aspects of the present disclosure.

### [ADVANTAGEOUS EFFECTS OF INVENTION]

According to the present invention, the Faraday efficiency at the time of producing an organic hydride can be improved.

### [BRIEF DESCRIPTION OF DRAWINGS]

Fig. 1 is a schematic diagram of an organic hydride production system according to a first embodiment.
Fig. 2A is a schematic diagram illustrating an example of arrangement of a cathode inlet, an upper cathode outlet, and a lower cathode outlet. Fig. 2B is a schematic diagram illustrating another example of the arrangement of the cathode inlet, the upper cathode outlet, and the lower cathode outlet.
Fig. 3 is a schematic diagram of an organic hydride production system according to a second embodiment.
Fig. 4A is a schematic diagram illustrating an example of arrangement of a cathode inlet, an upper cathode outlet, and a lower cathode outlet. Fig. 4B is a schematic diagram illustrating another example of the arrangement of the cathode inlet, the upper cathode outlet, and the lower cathode outlet.

### [DESCRIPTION OF EMBODIMENTS]

Hereinafter, the present invention will be described based on preferred embodiments with reference to the drawings. The embodiments are illustrative rather than limiting the invention, and all features described in the embodiments and combinations thereof are not necessarily essential to the invention. The same or equivalent components, members, and processes illustrated in the drawings are denoted by the same reference numerals, and redundant description will be omitted as appropriate. In addition, the scale and shape of each part illustrated in each drawing are set for convenience in order to facilitate the description, and are not to be limitedly interpreted unless otherwise specified. Furthermore, when the terms "first", "second", and the like are used in the present specification or claims, the terms do not represent any order or importance, but are used to distinguish one configuration from another configuration. In addition, in each drawing, some of members that are not important for describing the embodiments are omitted.

### First Embodiment

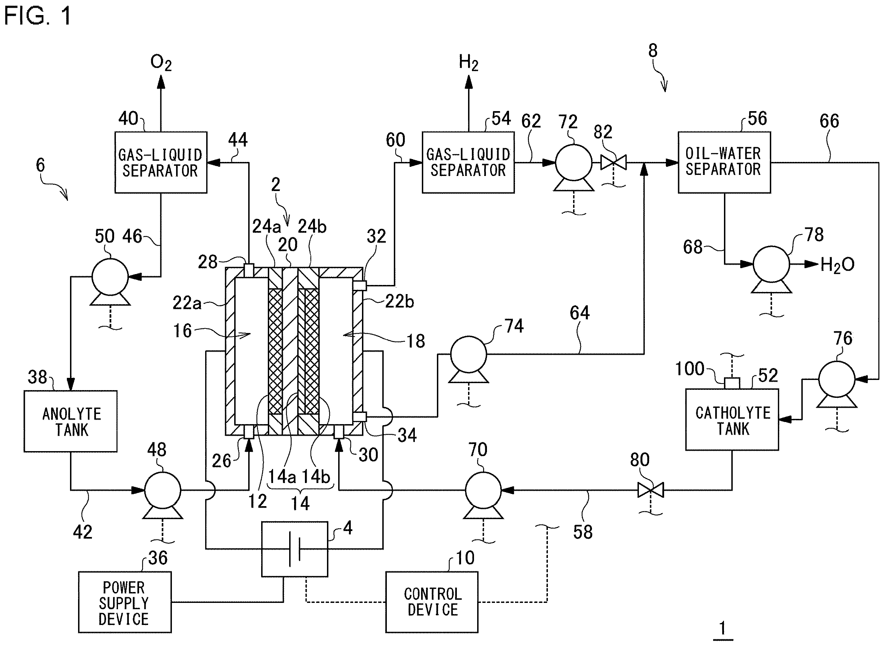

Fig. 1 is a schematic diagram of an organic hydride production system 1 according to a first embodiment. The organic hydride production system 1 includes an organic hydride production device 2, a power supply 4, an anolyte supply device 6, a catholyte supply device 8, and a control device 10 as a main configuration.

The organic hydride production device 2 is an electrolyzer for generating an organic hydride by hydrogenating a substance to be hydrogenated which is a dehydrogenated product of the organic hydride by an electrochemical reduction reaction. The organic hydride production device 2 has an anode electrode 12, a cathode electrode 14, an anode chamber 16, a cathode chamber 18, and a membrane 20. Although only one organic hydride production device 2 is illustrated in Fig. 1, the organic hydride production system 1 may include a plurality of organic hydride production devices 2. In this case, the respective organic hydride production devices 2 are stacked in the same direction such that the anode chamber 16 and the cathode chamber 18 are arranged in the same direction. As a result, the organic hydride production devices 2 are electrically connected in series. Note that the organic hydride production devices 2 may be connected in parallel, or may be a combination of series connection and parallel connection.

The anode electrode 12 (anode) oxidizes water in an anolyte to generate protons. The anode electrode 12 has, for example, a metal such as iridium (Ir), ruthenium (Ru), or platinum (Pt), or a metal oxide thereof as an anode catalyst. The anode catalyst may be dispersedly supported or coated on a base material having electron conductivity. The base material includes a material containing, for example, a metal such as titanium (Ti) or stainless steel (SUS) as a main component. Examples of the form of the base material include a woven fabric sheet or a nonwoven fabric sheet, a mesh, a porous sintered body, a foamed molded body (foam), and an expanded metal.

The cathode electrode 14 (cathode) hydrogenates a substance to be hydrogenated in a catholyte with protons to generate an organic hydride. The cathode electrode 14 of the present embodiment has a catalyst layer 14a and a diffusion layer 14b. The catalyst layer 14a is disposed closer to the membrane 20 than the diffusion layer 14b. The catalyst layer 14a of the present embodiment is in contact with a main surface of the membrane 20. The catalyst layer 14a contains, for example, platinum or ruthenium as a cathode catalyst for hydrogenating the substance to be hydrogenated. It is preferable that the catalyst layer 14a also contains a porous catalyst support that supports the cathode catalyst. The catalyst support includes an electron-conductive material such as porous carbon, a porous metal, or a porous metal oxide.

Furthermore, the cathode catalyst is coated with an ionomer (cation exchange ionomer). For example, the catalyst support which is in the state of supporting the cathode catalyst is coated with an ionomer. Examples of the ionomer include a perfluorosulfonic acid polymer such as Nafion (registered trademark) or Flemion (registered trademark). It is preferable that the cathode catalyst is partially coated with the ionomer. As a result, it is possible to efficiently supply three elements (the substance to be hydrogenated, a proton, and an electron) necessary for an electrochemical reaction in the catalyst layer 14a to the reaction field.

The diffusion layer 14b uniformly diffuses a liquid substance to be hydrogenated supplied from the outside into the catalyst layer 14a. The organic hydride generated in the catalyst layer 14a is discharged to the outside of the cathode electrode 14 through the diffusion layer 14b. The diffusion layer 14b of the present embodiment is in contact with a main surface of the catalyst layer 14a on a side opposite to the membrane 20. The diffusion layer 14b includes a conductive material such as carbon or a metal. In addition, the diffusion layer 14b is a porous body such as a sintered body of fibers or particles or a foamed molded body. Specific examples of the material included in the diffusion layer 14b include a carbon woven fabric (carbon cloth), a carbon nonwoven fabric, and carbon paper.

The anode electrode 12 is equipped in the anode chamber 16. The anode chamber 16 is defined by, for example, the membrane 20, a plate portion 22a, and a spacer 24a. When the organic hydride production system 1 includes only one organic hydride production device 2, the plate portion 22a can correspond to a so-called end plate. When the organic hydride production system 1 includes a plurality of organic hydride production devices 2 and the organic hydride production devices 2 are arranged next to the plate portion 22a, the plate portion 22a can correspond to a so-called separator.

The plate portion 22a is a plate material including a metal such as stainless steel or titanium. The plate portion 22a is installed on a side of the anode electrode 12 opposite to the membrane 20 and forms a part of the anode chamber 16. The plate portion 22a as an example has a groove-shaped flow path on a surface defining the anode chamber 16, that is, a main surface facing the side of the anode electrode 12. The anolyte supplied to the anode chamber 16 is supplied to the anode electrode 12 through the flow path, and is discharged from the anode chamber 16 through the flow path. The spacer 24a is a frame-shaped seal material disposed between the membrane 20 and the plate portion 22a. A space excluding the anode electrode 12 in the anode chamber 16 forms a flow path of the anolyte.

The organic hydride production device 2 includes an anode inlet 26 and an anode outlet 28 connected to the anode chamber 16. The anode inlet 26 is an opening for supplying an external anolyte into the anode chamber 16. The anode outlet 28 is an opening for discharging the anolyte in the anode chamber 16 to the outside. The anode inlet 26 and the anode outlet 28 are provided, for example, in the plate portion 22a. The anode inlet 26 is positioned below the anode outlet 28. In the present embodiment, the anode inlet 26 is provided on a bottom surface of the anode chamber 16, and the anode outlet 28 is provided on a top surface of the anode chamber 16. The anode inlet 26 and the anode outlet 28 may or may not overlap when viewed from a vertical direction.

The cathode electrode 14 is equipped in the cathode chamber 18. The cathode chamber 18 is defined by, for example, the membrane 20, a plate portion 22b, and a spacer 24b. The plate portion 22b can correspond to an end plate or a separator similarly to the plate portion 22a. The plate portion 22b is a plate material including a metal such as stainless steel or titanium. The plate portion 22b is installed on the side of the cathode electrode 14 opposite to the membrane 20 and forms a part of the cathode chamber 18. The plate portion 22b as an example has a groove-shaped flow path on a surface defining the cathode chamber 18, that is, a main surface facing the side of the cathode electrode 14. The catholyte supplied to the cathode chamber 18 is supplied to the cathode electrode 14 through the flow path, and is discharged from the cathode chamber 18 through the flow path. The spacer 24b is a frame-shaped seal material disposed between the membrane 20 and the plate portion 22b. A space excluding the cathode electrode 14 in the cathode chamber 18 forms a flow path of the catholyte.

The organic hydride production device 2 includes a cathode inlet 30, an upper cathode outlet 32, and a lower cathode outlet 34 connected to the cathode chamber 18. The cathode inlet 30 is an opening for supplying an external catholyte into the cathode chamber 18. The upper cathode outlet 32 is an opening for discharging the catholyte and hydrogen gas described later in the cathode chamber 18 to the outside. The lower cathode outlet 34 is an opening for discharging the catholyte and water to be described later in the cathode chamber 18 to the outside. The cathode inlet 30, the upper cathode outlet 32, and the lower cathode outlet 34 are provided, for example, in the plate portion 22b. The arrangements and functions of the cathode inlet 30, the upper cathode outlet 32, and the lower cathode outlet 34 will be described in detail later. Note that Fig. 1 schematically illustrates positions of the cathode inlet 30, the upper cathode outlet 32, and the lower cathode outlet 34.

The anode chamber 16 and the cathode chamber 18 are separated by the membrane 20. The membrane 20 is sandwiched between the anode electrode 12 and the cathode electrode 14. The membrane 20 of the present embodiment includes a solid polymer electrolyte membrane having proton conductivity, and transfers protons from the side of the anode chamber 16 to the side of the cathode chamber 18. The solid polymer electrolyte membrane is not particularly limited as long as it is a material through which protons conduct, and examples thereof include a fluorine-based ion exchange membrane having a sulfonate group.

The anolyte is supplied to the anode chamber 16 by the anolyte supply device 6. The anolyte contains water to be supplied to the anode electrode 12. Examples of the anolyte include an aqueous sulfuric acid solution, an aqueous nitric acid solution, an aqueous hydrochloric acid solution, pure water, and ion-exchanged water.

The catholyte is supplied to the cathode chamber 18 by the catholyte supply device 8. The catholyte contains an organic hydride raw material (substance to be hydrogenated) to be supplied to the cathode electrode 14. As an example, the catholyte does not contain an organic hydride before the start of the operation of the organic hydride production system 1, and after the start of the operation, the organic hydride generated by electrolysis is mixed in, whereby the catholyte becomes the liquid mixture of the substance to be hydrogenated and the organic hydride. The substance to be hydrogenated and the organic hydride are preferably a liquid at 20°C and 1 atm.

The substance to be hydrogenated and the organic hydride used in the present embodiment are not particularly limited as long as they are organic compounds capable of adding/desorbing hydrogen by reversibly causing a hydrogenation reaction/dehydrogenation reaction. As the substance to be hydrogenated and the organic hydride, an acetone-isopropanol type, a benzoquinone-hydroquinone type, an aromatic hydrocarbon type, and the like can be widely used. Among these, the aromatic hydrocarbon type is preferable from the viewpoint of transportability during energy transport or the like.

An aromatic hydrocarbon compound used as the substance to be hydrogenated is a compound containing at least one aromatic ring. Examples of the aromatic hydrocarbon compound include benzene, alkylbenzene, naphthalene, alkylnaphthalene, anthracene, and diphenylethane. The alkylbenzene contains a compound in which 1 to 4 hydrogen atoms in the aromatic ring are substituted with a linear alkyl group or a branched alkyl group having 1 to 6 carbon atoms. Examples of such a compound include toluene, xylene, mesitylene, ethylbenzene, and diethylbenzene. The alkylnaphthalene contains a compound in which 1 to 4 hydrogen atoms in the aromatic ring are substituted with a linear alkyl group or a branched alkyl group having 1 to 6 carbon atoms. Examples of such a compound include methylnaphthalene. These compounds may be used alone or in combination.

The substance to be hydrogenated is preferably at least one of toluene and benzene. It is also possible to use a nitrogen-containing heterocyclic aromatic compound such as pyridine, pyrimidine, pyrazine, quinoline, isoquinoline, N-alkylpyrrole, N-alkylindole, or N-alkyldibenzopyrrole as the substance to be hydrogenated. The organic hydride is obtained by hydrogenating the above-described substance to be hydrogenated, and examples thereof include cyclohexane, methylcyclohexane, dimethylcyclohexane, and piperidine.

A reaction that occurs in a case where toluene (TL) is used as an example of the substance to be hydrogenated in the organic hydride production device 2 is as follows. The organic hydride obtained in a case where toluene is used as the substance to be hydrogenated is methylcyclohexane (MCH).

### <Electrode Reaction in Anode Electrode>

3H₂O→3/2O₂+6H⁺+6e⁻

### <Electrode Reaction in Cathode Electrode>

TL+ 6H⁺+6e⁻→MCH

That is, the electrode reaction in the anode electrode 12 and the electrode reaction in the cathode electrode 14 proceed in parallel. The protons generated by electrolysis of water in the anode electrode 12 are supplied to the cathode electrode 14 through the membrane 20. In addition, the electrons generated by the electrolysis of water are supplied to the cathode electrode 14 through the plate portion 22a, an external circuit, and the plate portion 22b. The protons and electrons supplied to the cathode electrode 14 are used for the hydrogenation of toluene in the cathode electrode 14. As a result, methylcyclohexane is generated.

Therefore, according to the organic hydride production system 1 according to the present embodiment, the electrolysis of water and the hydrogenation reaction of the substance to be hydrogenated can be performed in one step. For this reason, organic hydride production efficiency can be increased as compared with a conventional technique in which the organic hydride is produced by a two-step process which includes a process of producing hydrogen by water electrolysis or the like and a process of chemically hydrogenating the substance to be hydrogenated in a reactor such as a plant. Furthermore, since the reactor for performing the chemical hydrogenation and a high-pressure vessel for storing the hydrogen produced by the water electrolysis or the like are not required, a significant reduction in facility cost can be achieved.

In the cathode electrode 14, the following hydrogen gas generation reaction may occur as a side reaction together with the hydrogenation reaction of the substance to be hydrogenated which is the main reaction. As the supply amount of the substance to be hydrogenated to the catalyst layer 14a becomes insufficient, this side reaction is more likely to occur.

### <Side Reaction That Can Occur in Cathode Electrode>

2H⁺+2e⁻→H₂

When the protons move from the side of the anode chamber 16 to the side of the cathode chamber 18 through the membrane 20, the protons move together with water molecules. Therefore, water is accumulated in the cathode chamber 18 as the electrolytic reduction reaction proceeds.

The power supply 4 is a DC power supply that supplies power to the organic hydride production device 2. When power is supplied from the power supply 4 to the organic hydride production device 2, a predetermined electrolytic voltage is applied between the anode electrode 12 and the cathode electrode 14 of the organic hydride production device 2, and an electrolytic current flows. The power supply 4 receives power supplied from the power supply device 36 and supplies power to the organic hydride production device 2. The power supply device 36 can include a power generation device that generates power using renewable energy, for example, a wind power generation device, a solar power generation device, or the like. Note that the power supply device 36 is not limited to the power generation device using renewable energy, and may be a system power supply, a storage device storing power from the power generation device using renewable energy or the system power supply, or the like. In addition, a combination of two or more of them may be used.

The anolyte supply device 6 supplies the anolyte to the anode chamber 16. The anolyte supply device 6 has an anolyte tank 38, a gas-liquid separator 40, a first anode pipe 42, a second anode pipe 44, a third anode pipe 46, a first anode pump 48, and a second anode pump 50. The gas-liquid separator 40 can include a known gas-liquid separation tank. The first anode pump 48 and the second anode pump 50 can include known pumps such as a gear pump and a cylinder pump. Note that the anolyte supply device 6 may circulate the anolyte using a liquid feeding device other than the pump.

The anolyte tank 38 stores the anolyte to be supplied to the anode chamber 16. The anolyte tank 38 is connected to the anode chamber 16 by the first anode pipe 42. The first anode pipe 42 has one end connected to the anolyte tank 38 and the other end connected to the anode inlet 26. The first anode pump 48 is provided in the middle of the first anode pipe 42. The gas-liquid separator 40 is connected to the anode chamber 16 by the second anode pipe 44. The second anode pipe 44 has one end connected to the anode outlet 28 and the other end connected to the gas-liquid separator 40. The gas-liquid separator 40 is connected to the anolyte tank 38 by the third anode pipe 46. The second anode pump 50 is provided in the middle of the third anode pipe 46.

The anolyte in the anolyte tank 38 flows into the anode chamber 16 from the anode inlet 26 through the first anode pipe 42 by driving of the first anode pump 48. The anolyte is supplied to the anode chamber 16 in an upflow and subjected to the electrode reaction in the anode electrode 12. The anolyte in the anode chamber 16 is discharged from the anode outlet 28 and flows into the gas-liquid separator 40 through the second anode pipe 44. In the anode electrode 12, oxygen gas is generated by the electrode reaction. Therefore, the oxygen gas is mixed into the anolyte discharged from the anode chamber 16. The gas-liquid separator 40 separates the oxygen gas in the anolyte from the anolyte and discharges the oxygen gas to the outside of the system. The anolyte from which the oxygen gas has been separated is returned to the anolyte tank 38 through the third anode pipe 46 by driving of the second anode pump 50.

In the anolyte supply device 6 of the present embodiment, the anolyte is circulated between the anode chamber 16 and the anolyte tank 38. However, the present invention is not limited to this configuration, and the anolyte may be sent from the anode chamber 16 to the outside of the system without being returned to the anolyte tank 38.

The catholyte supply device 8 supplies the catholyte to the cathode chamber 18. The catholyte supply device 8 has a catholyte tank 52, a gas-liquid separator 54, an oil-water separator 56, a first cathode pipe 58 to a sixth cathode pipe 68, a first cathode pump 70 to a fifth cathode pump 78, and a first on-off valve 80 and a second on-off valve 82. The gas-liquid separator 54 can include a known gas-liquid separation tank. The oil-water separator 56 can include a known oil-water separation tank. The first cathode pump 70 to the fifth cathode pump 78 can include known pumps such as a gear pump and a cylinder pump. Note that the catholyte supply device 8 may circulate the catholyte using a liquid feeding device other than the pump. The first on-off valve 80 and the second on-off valve 82 can include known valves such as electromagnetic valves and air drive valves.

The catholyte tank 52 stores the catholyte to be supplied to the cathode chamber 18. The catholyte tank 52 is connected to the cathode chamber 18 by the first cathode pipe 58. The first cathode pipe 58 has one end connected to the catholyte tank 52 and the other end connected to the cathode inlet 30. The first cathode pump 70 and the first on-off valve 80 are provided in the middle of the first cathode pipe 58. The first cathode pump 70 is disposed closer to the cathode chamber 18 than the first on-off valve 80. The gas-liquid separator 54 is connected to the cathode chamber 18 by the second cathode pipe 60. The second cathode pipe 60 has one end connected to the upper cathode outlet 32 and the other end connected to the gas-liquid separator 54.

The oil-water separator 56 is connected to the gas-liquid separator 54 by the third cathode pipe 62. The second cathode pump 72 and the second on-off valve 82 are provided in the middle of the third cathode pipe 62. The second cathode pump 72 is disposed closer to the gas-liquid separator 54 than the second on-off valve 82. The oil-water separator 56 is connected to the cathode chamber 18 by the fourth cathode pipe 64. The fourth cathode pipe 64 has one end connected to the lower cathode outlet 34 and the other end connected to the oil-water separator 56. The third cathode pump 74 is provided in the middle of the fourth cathode pipe 64. In the present embodiment, the other end of the fourth cathode pipe 64 is connected to a region of the third cathode pipe 62 closer to the oil-water separator 56 than the second on-off valve 82, thereby being connected to the oil-water separator 56 via the third cathode pipe 62. However, the present invention is not limited to this configuration, and the fourth cathode pipe 64 may be directly connected to the oil-water separator 56.

The oil-water separator 56 is connected to the catholyte tank 52 by the fifth cathode pipe 66. The fourth cathode pump 76 is provided in the middle of the fifth cathode pipe 66. Further, the sixth cathode pipe 68 is connected to the oil-water separator 56. The sixth cathode pipe 68 has one end connected to the oil-water separator 56 and the other end connected to, for example, a drainage tank (not illustrated in the drawings). The fifth cathode pump 78 is provided in the middle of the sixth cathode pipe 68.

The catholyte in the catholyte tank 52 flows into the cathode chamber 18 from the cathode inlet 30 through the first cathode pipe 58 by driving of the first cathode pump 70. The first on-off valve 80 is opened to allow the circulation of the catholyte from the catholyte tank 52 to the cathode inlet 30. A part of the catholyte in the cathode chamber 18 flows out from the upper cathode outlet 32 to the second cathode pipe 60. Another part of the catholyte in the cathode chamber 18 flows out from the lower cathode outlet 34 to the fourth cathode pipe 64.

The lower cathode outlet 34 is disposed below the upper cathode outlet 32. In the present embodiment, the upper cathode outlet 32 is connected to a region above the half of the cathode chamber 18, and the lower cathode outlet 34 is connected to a region below the half of the cathode chamber 18. "Above the half" means above an intermediate position of the upper end and the lower end of the cathode chamber 18, and "below the half" means below the intermediate position. More preferably, the upper cathode outlet 32 is connected to a region from the upper end of the cathode chamber 18 to 1/4 of the entire cathode chamber 18, and the lower cathode outlet 34 is connected to a region from the lower end to 1/4.

As described above, hydrogen gas may be generated by the side reaction in the cathode electrode 14. Since the specific gravity of the hydrogen gas is smaller than that of the catholyte, the hydrogen gas is accumulated in the upper portion of the cathode chamber 18. Therefore, the hydrogen gas is also discharged in addition to the catholyte from the upper cathode outlet 32. In addition, water moves from the anode electrode 12 to the cathode electrode 14 together with protons. Since the specific gravity of the water is larger than that of the catholyte, the water is accumulated in the lower portion of the cathode chamber 18. Therefore, the water is also discharged in addition to the catholyte from the lower cathode outlet 34.

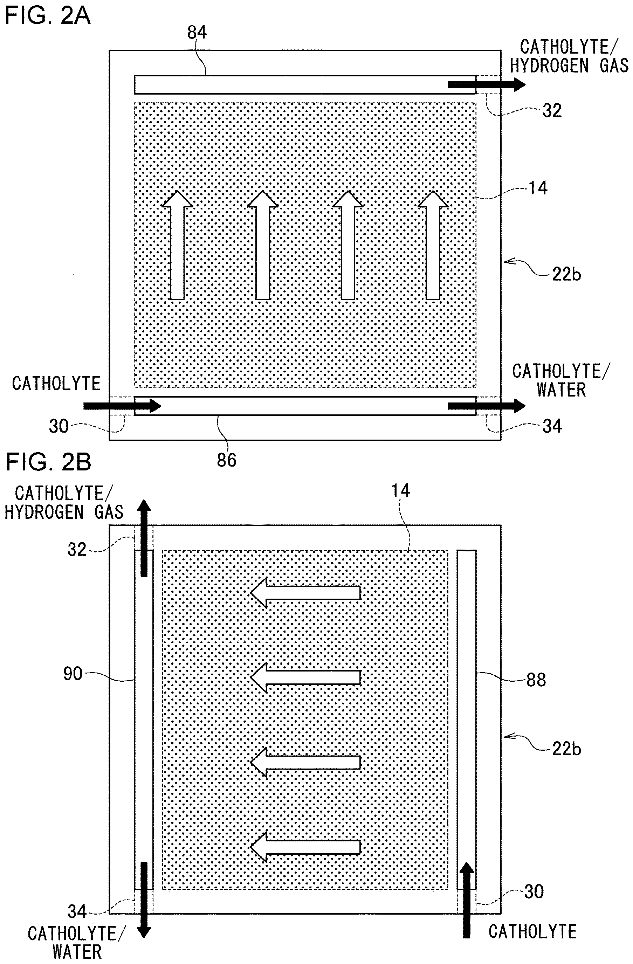

Fig. 2A is a schematic diagram illustrating an example of arrangement of the cathode inlet 30, the upper cathode outlet 32, and the lower cathode outlet 34. Fig. 2B is a schematic diagram illustrating another example of the arrangement of the cathode inlet 30, the upper cathode outlet 32, and the lower cathode outlet 34.

As illustrated in Fig. 2A, the plate portion 22b according to one example has an upper groove 84 and a lower groove 86 on a surface defining the cathode chamber 18. The upper groove 84 and the lower groove 86 form a manifold through which the catholyte flows. The upper groove 84 and the lower groove 86 extend horizontally. The lower groove 86 is disposed below the upper groove 84. For example, the upper groove 84 is disposed in a region above the half of the cathode chamber 18, and the lower groove 86 is disposed in a region below the half of the cathode chamber 18.

The cathode inlet 30 and the lower cathode outlet 34 are connected to the lower groove 86. For example, the cathode inlet 30 is connected to one end of the lower groove 86 and the lower cathode outlet 34 is connected to the other end of the lower groove 86. On the other hand, the upper cathode outlet 32 is connected to the upper groove 84. For example, the upper cathode outlet 32 is connected to an end of the upper groove 84 on the side farther from the cathode inlet 30. Therefore, not only the lower cathode outlet 34 but also the cathode inlet 30 is disposed below the upper cathode outlet 32. Note that, in the example illustrated in Fig. 2A, the cathode inlet 30 and the lower cathode outlet 34 are connected to the lower groove 86 from the side. In addition, the upper cathode outlet 32 is connected to the upper groove 84 from the side. However, the present invention is not limited thereto, and each inlet and outlet may be connected to each groove from above or below.

The catholyte supplied from the cathode inlet 30 into the cathode chamber 18 moves in the lower groove 86, spreads in a horizontal direction, and moves upward in the cathode electrode 14. When the catholyte having passed through the cathode electrode 14 reaches the upper groove 84, the catholyte is discharged to the outside together with hydrogen gas from the upper cathode outlet 32. Further, a part of the catholyte flowing in the lower groove 86 is discharged to the outside together with water from the lower cathode outlet 34 without passing through the cathode electrode 14.

In addition, as illustrated in Fig. 2B, the plate portion 22b according to another example has a first groove 88 and a second groove 90 disposed on the left and right of a surface defining the cathode chamber 18. The first groove 88 and the second groove 90 form a manifold through which the catholyte flows. The first groove 88 and the second groove 90 extend vertically. For example, the first groove 88 is disposed in a region on the right side of the half of the cathode chamber 18, and the second groove 90 is disposed in a region on the left side of the half of the cathode chamber 18. Note that the first groove 88 may be disposed on the left side, and the second groove 90 may be disposed on the right side. "Right side of the half" means the right side of the intermediate position of the left end and the right end of the cathode chamber 18, and "left side of the half" means the left side of the intermediate position. More preferably, the first groove 88 is disposed in a region from the side end of the cathode chamber 18 to 1/4 of the entire cathode chamber 18, and the second groove 90 is disposed in a region from the side end to 1/4.

The cathode inlet 30 is connected to the first groove 88. For example, the cathode inlet 30 is connected to the lower end of the first groove 88. On the other hand, the upper cathode outlet 32 and the lower cathode outlet 34 are connected to the second groove 90. For example, the upper cathode outlet 32 is connected to the upper end of the second groove 90 and the lower cathode outlet 34 is connected to the lower end of the second groove 90. Therefore, not only the lower cathode outlet 34 but also the cathode inlet 30 is disposed below the upper cathode outlet 32. Note that, in the example illustrated in Fig. 2B, the cathode inlet 30 is connected to the first groove 88 from below. The upper cathode outlet 32 is connected to the second groove 90 from above, and the lower cathode outlet 34 is connected to the second groove 90 from below. However, the present invention is not limited thereto, and each inlet and outlet may be connected to each groove from the side.

The catholyte supplied from the cathode inlet 30 into the cathode chamber 18 moves in the first groove 88, spreads in a vertical direction, and moves from the right side to the left side in the cathode electrode 14. When the catholyte having passed through the cathode electrode 14 reaches the second groove 90, a part thereof is discharged to the outside together with the hydrogen gas from the upper cathode outlet 32. Another part is discharged to the outside together with water from the lower cathode outlet 34.

In both the example illustrated in Fig. 2A and the example illustrated in Fig. 2B, the drive amount of the third cathode pump 74 is adjusted such that the discharge amount of the catholyte from the lower cathode outlet 34 (for example, the flow velocity of the catholyte) is smaller than the discharge amount of the catholyte from the upper cathode outlet 32. As a result, the upper cathode outlet 32 becomes a main outlet of the catholyte. In the example illustrated in Fig. 2A, the discharge amount from the lower cathode outlet 34 is smaller than the discharge amount of the catholyte from the upper cathode outlet 32, so that it is possible to reduce the amount of catholyte discharged to the outside of the cathode chamber 18 without passing through the cathode electrode 14. In addition, the catholyte is supplied from the cathode inlet 30 disposed below the upper cathode outlet 32, and the discharge of the catholyte from the lower cathode outlet 34 is suppressed more than the discharge from the upper cathode outlet 32, so that an upflow of the catholyte is formed in the cathode chamber 18.

The "upflow" of the catholyte in the present disclosure refers to discharging the half or more of the catholyte flowing into the cathode chamber 18 from the cathode inlet 30 below the cathode chamber 18 from the upper cathode outlet 32 above the cathode chamber 18. That is, the "upflow" means that the catholyte is caused to flow in the cathode chamber 18 from below, and the flow rate (flow velocity) of the catholyte at the upper cathode outlet 32 is caused to be larger than the flow rate of the catholyte at the lower cathode outlet 34. Therefore, a flow path shape of the catholyte in the cathode chamber 18 is not limited. A ratio between a flow rate Fᵤₚ of the upper cathode outlet 32 and a flow rate F_{down} of the lower cathode outlet 34 during energization is, for example, Fᵤₚ : F_{down} = more than 5 : less than 5 to less than 10 : more than 0. As an example, by adjusting the drive amount of the third cathode pump 74, 90% of the catholyte is discharged from the upper cathode outlet 32 and the remaining 10% is discharged from the lower cathode outlet 34. Note that the ratio of the catholyte discharged from the upper cathode outlet 32 and the lower cathode outlet 34 is not limited to 9 : 1, and can be appropriately set based on experiments, simulations, and the like.

The discharge of the catholyte from the cathode chamber 18 may be continuous or intermittent. For example, the catholyte may be discharged from only the upper cathode outlet 32 in a steady state, and the discharge of the catholyte from the lower cathode outlet 34 may be performed at predetermined time intervals. At the time of discharging the catholyte intermittently from the lower cathode outlet 34, discharging the catholyte from the upper cathode outlet 32 may be continued or stopped. However, from the viewpoint of stably maintaining the upflow and the like, when the catholyte is discharged from the lower cathode outlet 34, it is preferable to discharge even a little catholyte from the upper cathode outlet 32 (for example, so that Fᵤₚ at the above ratio is 3 or more).

In addition, in the present disclosure, the positions of the cathode inlet 30, the upper cathode outlet 32, and the lower cathode outlet 34 are defined at the position of the inner end, that is, the position of the opening provided on the inner wall surface of the cathode chamber 18. Therefore, "the lower cathode outlet 34 is disposed below the upper cathode outlet 32" means that the inner end of the lower cathode outlet 34 is disposed below the inner end of the upper cathode outlet 32. The upper cathode outlet 32 and the lower cathode outlet 34 may or may not overlap when viewed from the vertical direction. The cathode chamber 18 of the present embodiment is defined by the membrane 20, the plate portion 22b, and the spacer 24b. The cathode inlet 30, the upper cathode outlet 32, and the lower cathode outlet 34 are provided in the plate portion 22b. In this case, the positions of the openings formed on the inner wall surface of the plate portion 22b by the cathode inlet 30, the upper cathode outlet 32, and the lower cathode outlet 34 become the positions of each inlet and outlet.

In Figs. 2A and 2B, each inlet and each outlet extend linearly. Therefore, the outer end of the lower cathode outlet 34, that is, the opening connected to the outside of the system of the organic hydride production device 2 is also disposed below the outer end of the upper cathode outlet 32. However, the position of the outer end of each outlet is not particularly limited. For example, the outer end of the upper cathode outlet 32 may be at the same height as the outer end of the lower cathode outlet 34 by the upper cathode outlet 32 being routed downward outside the cathode chamber 18 (for example, inside the plate portion 22b) .

Each of the cathode inlet 30, the upper cathode outlet 32, and the lower cathode outlet 34 may be plural. When the organic hydride production device 2 has a plurality of upper cathode outlets 32, the plurality of upper cathode outlets 32 may be vertically displaced from each other. In addition, when the organic hydride production device 2 has a plurality of lower cathode outlets 34, the plurality of lower cathode outlets 34 may be vertically displaced from each other. In this case, some upper cathode outlets 32 can also function as lower cathode outlets 34 for discharging water. Some lower cathode outlets 34 can also function as upper cathode outlets 32 for discharging hydrogen gas. In addition, two openings to be arranged vertically may be regarded as a combination of the upper cathode outlet 32 and the lower cathode outlet 34, and a plurality of sets may be arranged vertically or horizontally. In addition, the cathode inlet 30 may be connected to a groove different from the groove to which the upper cathode outlet 32 or the lower cathode outlet 34 is connected. That is, a groove dedicated to the cathode inlet 30 may be provided in the plate portion 22b. In addition, a plurality of upper grooves 84, a plurality of lower grooves 86, a plurality of first grooves 88, and a plurality of second grooves 90 may be provided.

As illustrated in Fig. 1, the catholyte and the hydrogen gas discharged from the upper cathode outlet 32 flow into the gas-liquid separator 54 through the second cathode pipe 60. The gas-liquid separator 54 separates the hydrogen gas in the catholyte from the catholyte and discharges the hydrogen gas to the outside of the system. The catholyte from which the hydrogen gas has been separated flows into the oil-water separator 56 through the third cathode pipe 62 by driving of the second cathode pump 72. The second on-off valve 82 is opened to allow the circulation of the catholyte from the gas-liquid separator 54 to the oil-water separator 56.

The catholyte and the water discharged from the lower cathode outlet 34 flow into the oil-water separator 56 through the fourth cathode pipe 64 by driving of the third cathode pump 74. An upflow of the catholyte is formed in the cathode chamber 18, and the amount of catholyte discharged from the lower cathode outlet 34 is smaller than the amount of catholyte discharged from the upper cathode outlet 32. For this reason, there is a high possibility that hydrogen gas is not mixed in the catholyte discharged from the lower cathode outlet 34, or even if the hydrogen gas is mixed in the catholyte, the amount of hydrogen gas is extremely small. Therefore, the catholyte discharged from the lower cathode outlet 34 can be sent to the oil-water separator 56 without passing through the gas-liquid separator 54. Note that the fourth cathode pipe 64 may be connected to the gas-liquid separator 54, and the catholyte discharged from the lower cathode outlet 34 may pass through the gas-liquid separator 54.

The oil-water separator 56 separates the water in the catholyte from the catholyte. The separated water is discharged to the drainage tank through the sixth cathode pipe 68 by driving of the fifth cathode pump 78. The catholyte from which the water has been separated is returned to the catholyte tank 52 through the fifth cathode pipe 66 by driving of the fourth cathode pump 76. Note that the catholyte tank 52 may also have the function of the oil-water separator 56.

In the catholyte supply device 8 of the present embodiment, the catholyte is circulated between the cathode chamber 18 and the catholyte tank 52. However, the present invention is not limited to this configuration, and the catholyte may be sent to the outside of the system from the cathode chamber 18 without being returned to the catholyte tank 52.

The control device 10 controls the supply of power from the power supply 4 to the organic hydride production device 2. In addition, the control device 10 controls the anolyte supply device 6 and the catholyte supply device 8. Specifically, the control device 10 controls driving of each anode pump and each cathode pump. In addition, the control device 10 controls opening and closing of the first on-off valve 80 and the second on-off valve 82. The control device 10 is realized by an element or a circuit such as a CPU or a memory of a computer as a hardware configuration, and is realized by a computer program or the like as a software configuration. However, the control device 10 is illustrated as a functional block realized by cooperation between them in Fig. 1, it should be understood by those skilled in the art that the functional block can be implemented in various forms by a combination of hardware and software.

As described above, the organic hydride production device 2 according to the present embodiment includes the cathode chamber 18 that equips the cathode electrode 14 for generating the organic hydride, the cathode inlet 30 that is connected to the cathode chamber 18 and supplies an external catholyte into the cathode chamber 18, the upper cathode outlet 32 that is connected to the cathode chamber 18 and discharges the catholyte and hydrogen gas in the cathode chamber 18 to the outside, and the lower cathode outlet 34 that is connected to the cathode chamber 18 below the upper cathode outlet 32 and discharges the catholyte and water in the cathode chamber 18 to the outside.

In the cathode electrode 14, the hydrogenation reaction of the substance to be hydrogenated may occur as the main reaction, and the hydrogen generation reaction may occur as the side reaction. The occurrence of the side reaction leads to reduction in the Faraday efficiency at the time of producing the organic hydride. In addition, since protons move from the side of the anode electrode 12 to the side of the cathode electrode 14 with water, the water is accumulated in the cathode chamber 18. The water inhibits the flow of the substance to be hydrogenated. Therefore, when a large amount of water is accumulated in the cathode chamber 18, the amount of the substance to be hydrogenated supplied to the reaction field of the catalyst layer 14a decreases, and the side reaction is more likely to proceed. The hydrogen gas generated by the side reaction also inhibits the flow of the substance to be hydrogenated. For this reason, the side reaction is more likely to occur by the hydrogen gas generated by the side reaction. Therefore, it is desirable to discharge the hydrogen gas and the water staying in the cathode chamber 18 from the cathode chamber 18.

The hydrogen gas has a specific gravity smaller than that of the substance to be hydrogenated or the organic hydride. On the other hand, the water has a specific gravity larger than that of the substance to be hydrogenated or the organic hydride. Therefore, in the cathode chamber 18 provided with one opening above and one opening below, in a case of forming a flow in which the catholyte is supplied from the lower opening and discharged from the upper opening, that is, an upflow of the catholyte, the hydrogen gas is easily discharged from the cathode chamber 18. However, the water is less likely to be discharged from the cathode chamber 18 and is accumulated in the bottom portion of the cathode chamber 18. Conversely, in a case of forming a flow in which the catholyte is supplied from the upper opening and is discharged from the lower opening, that is, a downflow of the catholyte, the water is easily discharged from the cathode chamber 18. However, the hydrogen gas is less likely to be discharged from the cathode chamber 18 and is accumulated in the upper portion of the cathode chamber 18.

When the hydrogen gas is accumulated in the cathode chamber 18, an internal pressure of the cathode chamber 18 may increase to cause leakage of the catholyte. For this reason, in the conventional organic hydride production device including the cathode chamber 18 in which one opening is provided above and one opening is provided below, the catholyte is always supplied to the cathode chamber 18 in an upflow by focusing on the discharge of the hydrogen gas. Sufficient measures are not taken against the water accumulated in the cathode chamber 18.

However, in order to improve the Faraday efficiency at the time of producing the organic hydride, the water accumulated in the cathode chamber 18 is a problem that cannot be ignored. For this problem, the organic hydride production device 2 of the present embodiment includes the upper cathode outlet 32 that discharges the catholyte and hydrogen gas in the cathode chamber 18 to the outside, and the lower cathode outlet 34 that is disposed below the upper cathode outlet 32 and discharges the catholyte and water in the cathode chamber 18 to the outside. As a result, it is possible to simultaneously realize the discharge of the hydrogen gas accumulated in the upper portion of the cathode chamber 18 and the discharge of the water accumulated in the bottom portion of the cathode chamber 18. Therefore, according to the organic hydride production device 2 of the present embodiment, the occurrence of the side reaction in the cathode electrode 14 can be suppressed, so that the Faraday efficiency can be further improved.

In particular, when the solubility of the substance to be hydrogenated and the organic hydride in water is low, the drainage from the lower cathode outlet 34 is effective. For example, when the solubility of at least one of the substance to be hydrogenated and the organic hydride in the water is preferably 3 g/100 mL or less, and more preferably 2 g/100 mL or less, the drainage from the lower cathode outlet 34 is more effective. Examples of the substance to be hydrogenated and the organic hydride expected to have the effect of the drainage from the lower cathode outlet 34 include benzene (0.18 g/100 mL H₂O) and cyclohexane (0.36 g/100 mL H₂O); toluene (0.05 g/100 mL H₂O) and methylcyclohexane (1.6 g/100 mL H₂O); or naphthalene (0.003 g/100 mL H₂O) and decahydronaphthalene (0.001 g/100 mL H₂O).

The upper cathode outlet 32 of the present embodiment is connected to a region above the half of the cathode chamber 18. The lower cathode outlet 34 is connected to a region below the half of the cathode chamber 18. As a result, it is easier to discharge the hydrogen gas from the upper cathode outlet 32 and the water from the lower cathode outlet 34. Therefore, the Faraday efficiency at the time of producing the organic hydride can be further improved.

### Second Embodiment

A second embodiment has a configuration substantially common to that of the first embodiment, except for a part of a structure of a catholyte supply device 8 and arrangement of a cathode inlet 30, an upper cathode outlet 32, and a lower cathode outlet 34. Hereinafter, the present embodiment will be described focusing on a configuration different from that of the first embodiment, and the common configuration will be briefly described or description thereof will be omitted.

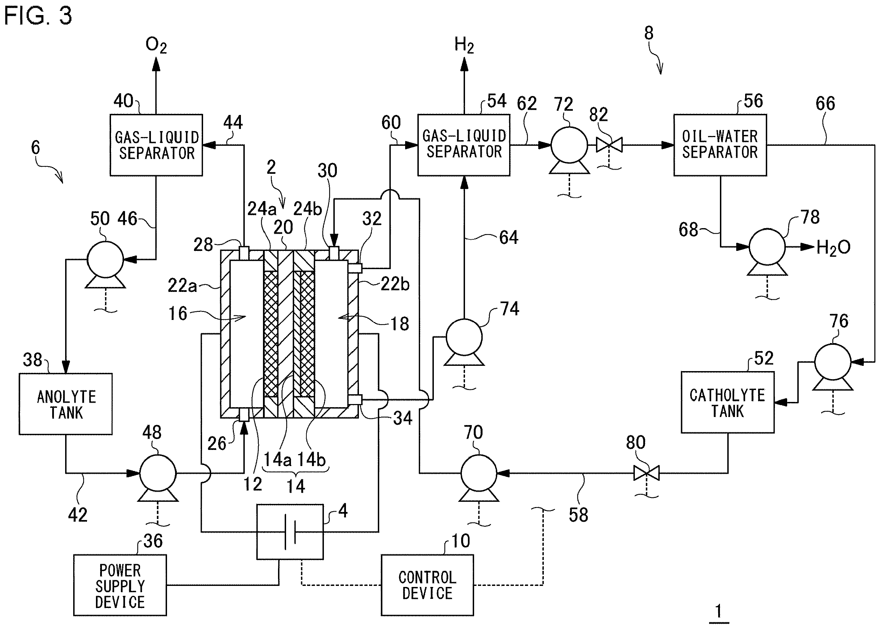

Fig. 3 is a schematic diagram of an organic hydride production system 1 according to the second embodiment. In the present embodiment, the connection destination of a fourth cathode pipe 64 is different from that in the first embodiment. That is, in the first embodiment, the fourth cathode pipe 64 has one end connected to the lower cathode outlet 34 and the other end connected to an oil-water separator 56. On the other hand, in the present embodiment, the fourth cathode pipe 64 has one end connected to the lower cathode outlet 34 and the other end connected to a gas-liquid separator 54.

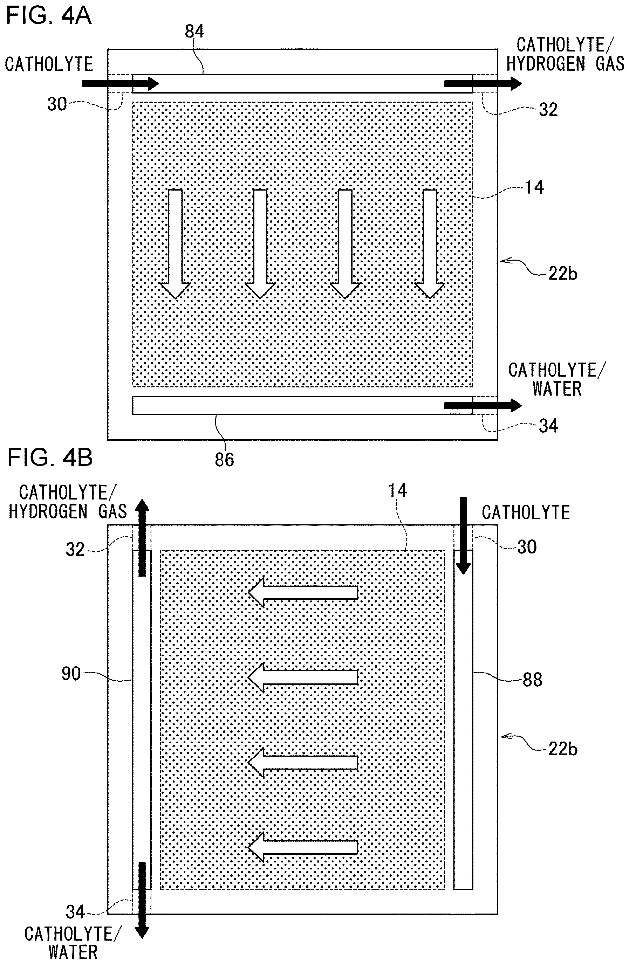

Fig. 4A is a schematic diagram illustrating an example of arrangement of the cathode inlet 30, the upper cathode outlet 32, and the lower cathode outlet 34. Fig. 4B is a schematic diagram illustrating another example of the arrangement of the cathode inlet 30, the upper cathode outlet 32, and the lower cathode outlet 34. The present embodiment is different from the first embodiment in the arrangement of the cathode inlet 30. That is, in the first embodiment, the cathode inlet 30 is connected below the cathode chamber 18. On the other hand, in the present embodiment, the cathode inlet 30 is connected above the cathode chamber 18.

As illustrated in Fig. 4A, a plate portion 22b according to one example has an upper groove 84 and a lower groove 86 on a surface defining the cathode chamber 18. The upper groove 84 and the lower groove 86 extend horizontally. The lower groove 86 is disposed below the upper groove 84. For example, the upper groove 84 is disposed in a region above the half of the cathode chamber 18, and the lower groove 86 is disposed in a region below the half of the cathode chamber 18.

The cathode inlet 30 and the upper cathode outlet 32 are connected to the upper groove 84. For example, the cathode inlet 30 is connected to one end of the upper groove 84 and the upper cathode outlet 32 is connected to the other end of the upper groove 84. On the other hand, the lower cathode outlet 34 is connected to the lower groove 86. For example, the lower cathode outlet 34 is connected to an end of the lower groove 86 on the side farther from the cathode inlet 30. Note that, in the example illustrated in Fig. 4A, each inlet and each outlet are connected to each groove from the side. However, the present invention is not limited thereto, and each inlet and each outlet may be connected to each groove from above or below.

The catholyte supplied from the cathode inlet 30 into the cathode chamber 18 moves in the upper groove 84, spreads in a horizontal direction, and moves downward in a cathode electrode 14. When the catholyte having passed through the cathode electrode 14 reaches the lower groove 86, the catholyte is discharged to the outside together with water from the lower cathode outlet 34. Further, a part of the catholyte flowing in the upper groove 84 is discharged to the outside together with hydrogen gas from the upper cathode outlet 32 without passing through the cathode electrode 14.

In addition, as illustrated in Fig. 4B, the plate portion 22b according to another example has a first groove 88 and a second groove 90 disposed on the right and left of a surface defining the cathode chamber 18. The first groove 88 and the second groove 90 extend vertically. For example, the first groove 88 is disposed in a region on the right side of the half of the cathode chamber 18, and the second groove 90 is disposed in a region on the left side of the half of the cathode chamber 18. Note that the first groove 88 may be disposed on the left side, and the second groove 90 may be disposed on the right side.

The cathode inlet 30 is connected to the first groove 88. For example, the cathode inlet 30 is connected to an upper end of the first groove 88. On the other hand, the upper cathode outlet 32 and the lower cathode outlet 34 are connected to the second groove 90. For example, the upper cathode outlet 32 is connected to the upper end of the second groove 90 and the lower cathode outlet 34 is connected to the lower end of the second groove 90. Note that, in the example illustrated in Fig. 4B, each inlet and each outlet are connected to each groove from above or below. However, the present invention is not limited thereto, and each inlet and outlet may be connected to each groove from the side.

The catholyte supplied from the cathode inlet 30 into the cathode chamber 18 moves in the first groove 88, spreads in a vertical direction, and moves from the right side to the left side in the cathode electrode 14. When the catholyte having passed through the cathode electrode 14 reaches the second groove 90, a part thereof is discharged to the outside together with the hydrogen gas from the upper cathode outlet 32. Another part is discharged to the outside together with water from the lower cathode outlet 34.

In both the example illustrated in Fig. 4A and the example illustrated in Fig. 4B, a drive amount of a third cathode pump 74 is adjusted such that a discharge amount of the catholyte from the lower cathode outlet 34 (for example, a flow velocity of the catholyte) is larger than a discharge amount of the catholyte from the upper cathode outlet 32. As a result, the lower cathode outlet 34 becomes a main outlet of the catholyte. In the example illustrated in Fig. 4A, the discharge amount of the catholyte from the upper cathode outlet 32 is smaller than the discharge amount from the lower cathode outlet 34, so that it is possible to reduce the amount of catholyte discharged to the outside of the cathode chamber 18 without passing through the cathode electrode 14. In addition, the catholyte is supplied from the cathode inlet 30 disposed above the lower cathode outlet 34, and the discharge of the catholyte from the lower cathode outlet 34 is promoted more than the discharge from the upper cathode outlet 32, so that a downflow of the catholyte is formed in the cathode chamber 18.

The "downflow" of the catholyte in the present disclosure refers to discharging the half or more of the catholyte flowing into the cathode chamber 18 from the cathode inlet 30 above the cathode chamber 18 from the lower cathode outlet 34 below the cathode chamber 18. That is, the "downflow" means that the catholyte is caused to flow in the cathode chamber 18 from above, and a flow rate (flow velocity) of the catholyte at the lower cathode outlet 34 is caused to be larger than a flow rate of the catholyte at the upper cathode outlet 32. Therefore, a flow path shape of the catholyte in the cathode chamber 18 is not limited. A ratio between a flow rate Fᵤₚ of the upper cathode outlet 32 and a flow rate F_{down} of the lower cathode outlet 34 during energization is, for example, Fᵤₚ : F_{down} = more than 0 : less than 10 to less than 5 : more than 5. Note that the ratio of the catholyte discharged from the upper cathode outlet 32 and the lower cathode outlet 34 can be appropriately set based on experiments, simulations, and the like.

The discharge of the catholyte from the cathode chamber 18 may be continuous or intermittent. For example, the catholyte may be discharged from only the lower cathode outlet 34 in a steady state, and the discharge of the catholyte from the upper cathode outlet 32 may be performed at predetermined time intervals. At the time of discharging the catholyte intermittently from the upper cathode outlet 32, discharging the catholyte from the lower cathode outlet 34 may be continued or stopped. However, from the viewpoint of stably maintaining the downflow and the like, when the catholyte is discharged from the upper cathode outlet 32, it is preferable to discharge even a little catholyte from the lower cathode outlet 34 (for example, so that F_{down} at the above ratio is 3 or more).

As illustrated in Fig. 3, the catholyte and the hydrogen gas discharged from the upper cathode outlet 32 flow into the gas-liquid separator 54 through the second cathode pipe 60. The gas-liquid separator 54 separates the hydrogen gas in the catholyte from the catholyte and discharges the hydrogen gas to the outside of the system. The catholyte from which the hydrogen gas has been separated flows into the oil-water separator 56 through the third cathode pipe 62.

The catholyte and water discharged from the lower cathode outlet 34 flow into the gas-liquid separator 54 through the fourth cathode pipe 64 by driving of the third cathode pump 74. After the hydrogen gas is removed by the gas-liquid separator 54, the catholyte flows into the oil-water separator 56 through the third cathode pipe 62. The downflow of the catholyte is formed in the cathode chamber 18, and the amount of catholyte discharged from the lower cathode outlet 34 is larger than the amount of catholyte discharged from the upper cathode outlet 32. For this reason, the hydrogen gas is easily mixed in the catholyte discharged from the lower cathode outlet 34. Therefore, in the present embodiment, the catholyte discharged from the lower cathode outlet 34 is passed through the gas-liquid separator 54 and then sent to the oil-water separator 56. When the hydrogen gas generation amount in the cathode chamber 18 is small due to the design of the organic hydride production system 1 or the like, and due to this, there is a low possibility that the hydrogen gas is discharged from the lower cathode outlet 34, the catholyte discharged from the lower cathode outlet 34 may be sent to the oil-water separator 56 without passing through the gas-liquid separator 54, similarly to the first embodiment.

The oil-water separator 56 separates the water in the catholyte from the catholyte. The separated water is discharged to a drainage tank through the sixth cathode pipe 68. The catholyte from which the water has been separated is returned to a catholyte tank 52 through the fifth cathode pipe 66. The organic hydride production device 2 according to the present embodiment can also obtain effects similar to those of the organic hydride production device 2 according to the first embodiment.

Hereinabove, the embodiments of the present invention have been described in detail. The above-described embodiments are merely specific examples for carrying out the present invention. The contents of the embodiments do not limit the technical scope of the present invention, and many design changes such as changes, additions, and deletions of components can be made without departing from the spirit of the invention defined in the claims. A new embodiment to which the design change is made has the combined effect of each of the embodiment and the modification. In the above-described embodiment, the contents that can be subjected to such design changes are emphasized with notations such as "of the present embodiment" and "in the present embodiment", but the design changes are allowed even in the contents without such notations. Any combination of the above-described components is also effective as an aspect of the present invention.

The embodiments may also be specified as the items described below.

### Item 1

An organic hydride production device (2) including:
a cathode chamber (18) that equips a cathode electrode (14) for hydrogenating a substance to be hydrogenated in a catholyte with a proton to produce an organic hydride;
a cathode inlet (30) that is connected to the cathode chamber (18) and supplies an external catholyte into the cathode chamber (18);
an upper cathode outlet (32) that is connected to the cathode chamber (18) and discharges the catholyte and hydrogen gas in the cathode chamber (18) to the outside; and
a lower cathode outlet (34) that is connected to the cathode chamber (18) below the upper cathode outlet (32) and discharges the catholyte and water in the cathode chamber (18) to the outside.

### Item 2

The organic hydride production device (2) according to Item 1, wherein
the upper cathode outlet (32) is connected to a region above the half of the cathode chamber (18), and
the lower cathode outlet (34) is connected to a region below the half of the cathode chamber (18).

### Item 3

The organic hydride production device (2) according to Item 1 or 2, wherein
the organic hydride production device (2) includes a plate portion (22b) having a surface defining the cathode chamber (18),
the plate portion (22b) has an upper groove (84) and a lower groove (86) disposed below the upper groove (84) on the surface,
the cathode inlet (30) and the lower cathode outlet (34) are connected to the lower groove (86), and
the upper cathode outlet (32) is connected to the upper groove (84).

### Item 4

The organic hydride production device (2) according to Item 1 or 2, wherein
the organic hydride production device (2) includes a plate portion (22b) having a surface defining the cathode chamber (18),
the plate portion (22b) has an upper groove (84) and a lower groove (86) disposed below the upper groove (84) on the surface,
the cathode inlet (30) and the upper cathode outlet (32) are connected to the upper groove (84), and
the lower cathode outlet (34) is connected to the lower groove (86).

### Item 5

The organic hydride production device (2) according to Item 1 or 2, wherein
the organic hydride production device (2) includes a plate portion (22b) having a surface defining the cathode chamber (18),
the plate portion (22b) has a first groove (88) and a second groove (90) that are disposed on the left and right of the surface and extend vertically,
the cathode inlet (30) is connected to the first groove (88), and
the upper cathode outlet (32) and the lower cathode outlet (34) are connected to the second groove (90).

### Item 6

An organic hydride production method including:
supplying a catholyte to a cathode chamber (18) equipping a cathode electrode (14) for hydrogenating a substance to be hydrogenated in the catholyte with a proton to produce an organic hydride; and
discharging the catholyte and hydrogen gas in the cathode chamber (18) to the outside from the cathode chamber (18), and discharging the catholyte and water in the cathode chamber (18) to the outside below a discharge position of the catholyte and the hydrogen gas.

### [INDUSTRIAL APPLICABILITY]

The present invention can be used in an organic hydride production device and an organic hydride production method.

### [REFERENCE SIGNS LIST]

2 organic hydride production device, 14 cathode electrode, 18 cathode chamber, 22b plate portion, 30 cathode inlet, 32 upper cathode outlet, 34 lower cathode outlet, 84 upper groove, 86 lower groove, 88 first groove, 90 second groove

## Claims

1. An organic hydride production device comprising:
a cathode chamber structured to equip a cathode electrode for hydrogenating a substance to be hydrogenated in a catholyte with a proton to produce an organic hydride;
a cathode inlet connected to the cathode chamber and structured to supply the catholyte of outside into the cathode chamber;
an upper cathode outlet connected to the cathode chamber and structured to discharge the catholyte and hydrogen gas in the cathode chamber to the outside; and
a lower cathode outlet connected to the cathode chamber below the upper cathode outlet and structured to discharge the catholyte and water in the cathode chamber to the outside.

2. The organic hydride production device according to claim 1, wherein
the upper cathode outlet is connected to a region above the half of the cathode chamber, and
the lower cathode outlet is connected to a region below the half of the cathode chamber.

3. The organic hydride production device according to claim 1 or 2, wherein
the organic hydride production device comprises a plate portion having a surface defining the cathode chamber,
the plate portion has an upper groove and a lower groove disposed below the upper groove on the surface,
the cathode inlet and the lower cathode outlet are connected to the lower groove, and
the upper cathode outlet is connected to the upper groove.

4. The organic hydride production device according to claim 1 or 2, wherein
the organic hydride production device comprises a plate portion having a surface defining the cathode chamber,
the plate portion has an upper groove and a lower groove disposed below the upper groove on the surface,
the cathode inlet and the upper cathode outlet are connected to the upper groove, and
the lower cathode outlet is connected to the lower groove.

5. The organic hydride production device according to claim 1 or 2, wherein
the organic hydride production device comprises a plate portion having a surface defining the cathode chamber,
the plate portion has a first groove and a second groove that are disposed on the left and right of the surface and extend vertically,
the cathode inlet is connected to the first groove, and
the upper cathode outlet and the lower cathode outlet are connected to the second groove.

6. An organic hydride production method comprising:
supplying a catholyte to a cathode chamber equipping a cathode electrode for hydrogenating a substance to be hydrogenated in the catholyte with a proton to produce an organic hydride; and
discharging the catholyte and hydrogen gas in the cathode chamber to the outside from the cathode chamber, and discharging the catholyte and water in the cathode chamber to the outside below a discharge position of the catholyte and the hydrogen gas.
